# EUROPEAN PATENT SPECIFICATION

(11) **EP 1 772 060 B1**
(45) Date of publication and mention of the grant of the patent: **09.09.2009**
(21) Application number: 06121252.8
(22) Date of filing: 26.09.2006
(51) Int. Cl.: A23J 3/22, A23J 3/08, A23J 3/10, A23J 3/16, A23L 1/0524, A23L 1/0532

(54) **High-protein dietary fibres and a method for the preparation thereof**
Eiweissreiche Diätfaser und Verfahren zu deren Herstellung
Fibres alimentaires riches en protéine et leur méthode de préparation.

(30) Priority: 05.10.2005 NL 1030118
(43) Date of publication of application: 11.04.2007
(73) Proprietor: NUG NAHRUNGS-UND GENUSSMITTEL VERTRIEBSGESELLSCHAFT MBH, 71334 Waiblingen (DE)
(72) Inventor: Penders, Johannes Antonius, 5324 AV, Ammerzoden (NL); van den Briel, Suzanne Titia, 5038 DK, Tilburg (NL)
(74) Representative: van Westenbrugge, Andries

(56) References cited:
- WO-A-03/061400
- WO-A-20/05004623
- NL-C1- 1 026 391
- US-A- 3 627 536
- US-A- 4 423 083
- US-A- 4 548 823

## Description

### Technical field of the invention

A first aspect of the invention relates to high-protein dietary fibres which are suitable, for example, for use in a meat substitute product and which are made up of at least a protein material, a hydrocolloid precipitating with metal cations, and water. The invention further relates to a method for the preparation of dietary fibres of this type.

### Prior art

High-protein dietary fibres as described above are known from WO 03/061400. This international patent application describes meat substitute products based on high-protein dietary fibres based on milk protein. Curd, cheese, whey protein, powdered milk and caseinate are specifically mentioned. In the preparation of a meat substitute product according to WO 03/061400, considerable protein losses occur in the process water and in the washing water, compared to cheese curd, especially when caseinates and whey proteins are used. Both result in a reduction of the product output.

Losses of this type are undesirable both economically and ecologically. The Applicant has therefore carried out research focusing on discovering a more efficient method for the preparation of high-protein dietary fibres containing water-soluble non-globular proteins.

US 4,423,083 describes a process for preparing protein fibre bundles comprising the steps of:
(a) preparing a mixture comprising heat coaguable protein, alginate and water;
(b) cooling the mixture to unidirectionally freeze the water and to separate the protein into independent fibres;
(c) slicing the solid mass of step (b);
(d) melting the ice crystals;
(e) gelling, via infusion of gelation ions, the alginate in each fibre bundle;
(f) heating the resulting fibre bundles to coagulate the protein;
(g) treating the coagulated protein fibre bundles with an aqueous solution of a sequestering agent; and
(h) separating the fibre bundles.

US 4,548,823 describes a process for the formation of a fibrous material useful in the formation of a shrimp or crabmeat analog therefrom by extruding an aqueous solution of protein and alginate into a gelling bath which is maintained under boiling conditions during the formation of the fibres.

US 3,627,536 describes a method of preparing proteinaceous fibres comprising the steps of:
(1) admixing a proteinaceous aqueous suspension with an alginate salt;
(2) adding a coagulating agent to the admixture which is being stirred whereby soft fibers are formed;
(3) adding an acidic coagulation-accelerating agent with continued stirring whereby the fibers are hardened;
(4) boiling the mixture to coagulate the heat coagulable protein content of the fibres; and
(5) washing said fibres with water.

### Summary of the invention

The Applicant has found that this objective, as well as additional advantages which will become apparent from the description, may be achieved by using, in the preparation of the high-protein dietary fibres, a protein mixture containing, in addition to a water-soluble non-globular protein, a native, i.e. non-denatured, globular protein and by denaturing the native globular protein before separating from the process water the fibres formed.

More particularly, the Applicant has established that dietary fibres based on a mixture of non-globular water-soluble proteins and globular proteins may be produced in a high output with low protein losses by:
- forming a homogeneous aqueous mixture of native globular protein, water-soluble, non-globular protein, a hydrocolloid which precipitates with metal cations with a valency of at least two and water;
- combining the mixture thus obtained with an aqueous solution of a metal cation with a valency of at least two, the precipitating material being mechanically processed to obtain fibrous structures;
- separating the fibres thus obtained;
wherein prior to the combining of the mixture with the aqueous solution of a metal cation, the native globular protein is denatured.

Incorporating a native globular protein into the homogeneous aqueous mixture together with the non-globular water-soluble protein and denaturing the native globular protein causes both the globular protein and the non-globular water-soluble protein to be incorporated more effectively into the fibres formed. The product output is thus increased and protein losses in the waste stream reduced, while high-quality products are at the same time obtained.

### Detailed description of the invention

One aspect of the present invention therefore relates to a method for the preparation of high-protein dietary fibres involving the following process steps:
a. preparing a homogeneous aqueous mixture by mixing the following ingredients in the specified amounts:
   - from 1 to 10 % by weight of native globular protein belonging to the group consisting of whey proteins, egg proteins, soya proteins and combinations thereof;
   - from 1 to 12 % by weight of water-soluble, non-globular protein;
   - from 0.5 to 10 % by weight of a hydrocolloid which precipitates with metal cations with a valency of at least two; and
   - at least 60 % by weight of water;
b. combining the mixture with an aqueous solution containing from 0.1 to 5 % by weight of metal cations with a valency of at least two, the precipitating material being mechanically processed to obtain fibrous structures;
c. separating the fibres thus obtained;
wherein prior to the combining of the mixture with the aqueous solution of a metal cation, the native globular protein is denatured.

The term "globular protein", as used in the present application, relates to proteins which, as their very name indicates, have a globular, i.e. round, shape and which are to a greater or lesser degree soluble in water, wherein they form colloidal solutions. This characteristic distinguishes globular proteins from non-globular proteins, which generally have poor solubility. The globular structure of globular proteins is caused by the primary structure of the protein: the non-polar groups of the protein molecule are located inside the molecule, whereas the polar groups are located on the outer edge of the molecule. The protein molecule is thus able to enter into dipole-dipole interactions with water, hence the water solubility of these proteins. The term "globular protein" has been used for a long time and there are various methods for establishing whether or not a protein is globular.

The term "water-soluble non-globular proteins" refers to proteins which do not comply with the above-reproduced definition of globular protein and which, after dispersion at 70 °C in a 0.1 M NaCl solution having a pH of 7.5, have at a temperature of 20 °C a solubility of at least 10 g/l. This solubility is established by determining the protein content in the supernatant obtained after centrifugation of the protein dispersion at 2,000 g for 30 minutes. The protein content is determined using the Kjeldahl method, or a method equivalent thereto, using the correct nitrogen conversion factor. The advantages of the present method may be achieved using a broad range of water-soluble, non-globular proteins. Preferably, a vegetable protein and/or milk protein is used as the water-soluble non-globular protein. The following water-soluble non-globular proteins are particularly preferred: caseinate, pea protein, lupin protein, wheat protein and potato protein. It has been found that dietary fibres having an excellent nutritional value and very good organoleptic characteristics may be obtained by using one or more of these proteins.

The water-soluble non-globular protein used in the present invention is particularly preferably a caseinate, in particular a caseinate having very good water solubility, in view of the fact that the invention is most advantageous for caseinates of this type. The caseinate such as is used in the present invention is preferably chosen from one or more caseinates from the group consisting of alkali metal caseinates, such as sodium caseinate and potassium caseinate, and ammonium caseinates. Sodium caseinate is most preferred.

The native globular protein used in the present method is preferably whey protein, egg protein (especially chicken egg protein) or soya protein, in particular whey protein. A known whey product which is suitable for use in the present invention is WPC 80, a product obtained by the ultrafiltration of whey.

The whey protein used may be both whey protein derived from sour whey (for example, WPC 80 sour) and whey protein derived from sweet whey (for example, WPC 80 sweet). In a particularly preferred embodiment of the invention, use is made of whey proteins derived from sour whey. If sour whey is used as the whey protein source, especially in combination with caseinate, there results, in addition to a higher product output, a beneficial protein yield and a good fibre quality, a protein composition in the product that is closer to the natural milk composition than if a non-sour whey is used as the whey protein source. The Applicant believes, without thereby entailing any limitation, that this may be attributed to the absence of specific protein fractions. Sour whey is obtained in a different manner to sweet whey. Sweet whey thus contains a protein fraction generally referred to as glycomacropeptide (GMP). Sour whey, which is obtained in the extraction of casein, does not contain this GMP fraction. Sour whey therefore has a different amino acid composition from sweet whey. The consequence is that the use of sour whey therefore leads to a product having a different composition.

If whey proteins derived from sour whey are used, a product is obtained having an amino acid composition with a high content of essential amino acids such as tryptophan, lysine, sulphur-containing amino acids such as cysteine and methionine. Products may thus be obtained, especially if use is made of whey proteins derived from sour whey and caseinate, having an amino acid composition which compares favourably with the amino acid composition of meat such as is handled by, *inter alia*, the FAO (www.fao.org).

| Amino acid g/100 g protein | Caseinate | Sour WPC | Sweet WPC | Meat |
|---|---|---|---|---|
| Tryptophan | 1.4 | 2.6 | 2.2 | 1.2 |
| Threonine | 4.6 | 5.4 | 7.9 | 5.0 |
| Isoleucine | 5.8 | 6.0 | 7.2 | 4.9 |
| Leucine | 10.1 | 13.1 | 11.4 | 7.8 |
| Lysine | 8.3 | 11.1 | 9.8 | 7.9 |
| Methionine | 3.0 | 2.4 | 2.3 | 2.4 |
| Cysteine | 0.4 | 3.3 | 2.5 | 1.3 |
| Phenylalanine | 5.4 | 4.0 | 3.8 | 4.0 |
| Tyrosine | 5.8 | 3.8 | 3.2 | 3.1 |
| Valine | 7.4 | 5.6 | 6.9 | 5.2 |

The homogeneous aqueous mixture prepared in step a. of the present method contains the native globular protein and the water-soluble, non-globular protein preferably in a weight ratio of between 1:10 and 6:1, more particularly between 1:6 and 3:1. This same aqueous mixture contains the hydrocolloid which precipitates with metal cations with a valency of at least two and the combination of native globular protein and water-soluble, non-globular protein preferably in a weight ratio of between 1:6 and 1:1, more particularly between 1:5 and 1:2.

The combining of the protein/hydrocolloid mixture with the aqueous solution of metal cations in the present method causes the hydrocolloid to precipitate. During this precipitation, the hydrocolloid forms a three-dimensional network containing protein and other components. It has been found that this precipitation is associated with the formation of a skin at the location at which the hydrocolloid solution enters into contact with the solution of metal cations. The skin that is formed often tends to curl up and thus to form fibres. In the present method, the aqueous solution may be added to the homogeneous aqueous mixture. However, it is also possible to add the homogeneous aqueous mixture to the metal cation solution. For the formation of the fibres, it is important that a substantial contact surface is created for a certain period of time between the mixture, on the one hand, and the metal cation solution, on the other hand. Although it is important mechanically to process during the combining the skins that are formed in order to form fibres therefrom, it is also important that the intensity of this processing should not be so high that only small particles are formed instead of fibres.

The hydrocolloid which precipitates with metal cations with a valency of at least two is preferably chosen from the group consisting of alginates, pectins and mixtures thereof. Alginates and pectins with a low methoxy content are particularly suitable. A large number of alginates are commercially available; the invention makes use of, for example, Ca-reactive alginates such as the type obtained from brown algae. Particularly preferred are alkali metal alginates such as sodium and potassium alginate, in particular DMB sodium alginate (Manugel) from Kelco and the product FD125 from Danisco Cultor.

The denaturing of the native globular protein in the present method may take place by physical and/or chemical treatment of the native protein in such a way that a change in the structure of the protein occurs. Denaturation is preferably associated with an increase in the particle size of the globular protein. A consequence of the denaturing of the native globular protein is that the particle size of the globular protein increases relative to the native protein. This usually takes place by aggregation of the protein particles. The denaturing process preferably does not include the enzymatic modification of native protein, for example with transglutaminase and comparable enzymes.

Native whey proteins generally have an average particle size of approximately 3 to 6 nanometres whereas, for example, casein micelles generally have an average particle size of about 20 to 300 nm. The described increase in the particle size of the globular protein relative to the native protein is preferably a factor greater than or equal to 2, more preferably a factor greater than or equal to 3, most preferably a factor of more than 4. In other words, for the aforementioned whey proteins, an enlargement factor of 3 caused by denaturation means that the average particle size of the modified whey protein is from approximately 9 to 18 nm. Comparable enlargements may be achieved for other globular proteins. Particle sizes as described herein may be determined in a known manner by means of dynamic light scattering and/or transmission electron microscopy.

If the native globular protein contains whey protein, the denaturing process preferably leads to the formation of protein aggregates with a volume-weighted average particle size of at least 8 nm, preferably of at least 10 nm, more particularly of at least 12 nm.

In the present method, the denaturing process takes place before the aqueous solution of metal cations with a valency of at least two is added. More particularly, first of all a mixture is formed of the native globular protein, the water-soluble, non-globular protein and water, the native globular protein is subsequently denatured and the hydrocolloid which precipitates with metal cations with a valency of at least two is then added.

An advantageous embodiment of the present invention relates to the formation of fibres with a highly condensed hydrocolloid network. Increasing the density of the hydrocolloid network causes remaining components such as protein material and the like to be encompassed and retained more effectively. This may expediently be achieved by using a concentrated solution of metal cations, for example with a concentration of at least 1 % by weight, more particularly of at least 1.2 and most preferably of at least 1.5 % by weight. Examples of suitable metal cations include divalent calcium and magnesium cations. Most preferably, the metal cation used is Ca²⁺.

The metal cation solution is preferably a calcium chloride solution, although other, preferably soluble, calcium salts are also suitable, such as calcium acetate, calcium nitrate, calcium gluconate and mixtures thereof.

The somewhat bitter taste that may be produced in the dietary fibres when high metal cation concentrations are used can be eliminated by applying one or more washing steps. In an advantageous embodiment, the present method includes at least one washing step. In this washing step, at least 0.5 kg of water is preferably used per kg of fibre material.

The denaturing of the native globular protein may, in principle, be carried out in various ways. One of the most obvious ways is denaturing by heating. An alternative method for denaturing globular proteins is the application of extremely high pressure. Denaturation of proteins may be achieved by the application of pressures of more than 100 MPa, preferably of more than 200 MPa and more particularly of more than 300 MPa.

The type of native globular protein plays an important role in the choice of the denaturation conditions. Spiegel and Huss (Int. J. of. Fd. Sci. and Techn. 2202, 36, pp. 559 - 568) thus specify that 90 % of the most important whey protein, i.e. β-lactoglobulin, is denatured when a 10 % protein solution having a pH of 6.7 and a calcium ion concentration of 0.05 % by weight is heated for 9 minutes at a temperature of 80 °C. According to Mierzejewska, Panasiuk and Jedrychowski (Milchwissenschaft 57(1) 2002, pp. 9 - 13), 99 % of another whey protein, namely α-lactalbumin, denatures on heating to 100 °C for 30 minutes; in this research, the conditions were as are conventional in whey (0.6 % by weight protein, pH 6.7). Ovalbumin is the most important protein in chicken egg protein. Weijers, van Barneveld, Cohen, Stuart and Visschers (Protein Science 2003, 12, pp. 2693 - 2703) demonstrated that this protein is relatively sensitive to denaturation. 100 % of a 2.7 % by weight protein solution having a pH of 7.0 denatures during 15 minutes' heating to 80 °C. Soya protein, on the other hand, denatures somewhat less easily compared to, for example, β-lactoglobulin and ovalbumin. According to Sorgentini, Wagner and A 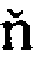 ón (J. Agric. Food Chem. 1995, 43, pp. 2471 - 2479), 74 % of a 5 % by weight soya isolate dispersion (pH 7.0) denatures during 30 minutes' heating to 80 °C.

Particularly good results are obtained if at least 60 % by weight, preferably at least 80 % by weight, of the native globular protein present is denatured prior to the addition of the metal cation-containing solution. The extent of denaturation can be determined using methods known from the prior art such as, for example, the above-described scientific publications.

Preferably, the native globular protein is denatured by means of a heat treatment. It is possible to carry out denaturation by heating an aqueous mixture containing the native globular protein for a comparatively short time, for example a few minutes, at a relatively high temperature of, for example, 90 °C or more. It is also possible to heat for a longer time at a lower temperature, for example for 15 minutes at 80 °C.

In the present method, the pH of the homogeneous aqueous mixture is set at a value in the range of from 4 to 7. The exact pH value is, in particular, determined by the desired structure of the dietary fibre.

The pH will thus be set to a value of between 5.0 and 7.0 if a structure corresponding to the structure of beef, pork or chicken is desired. This structure has fairly long fibres.

If a structure more similar to fish is desired, the pH is set to a value of between 4.5 and 6.0. This structure has fairly short fibres as a characteristic feature.

If the present method uses proteins having a substantial content of polyvalent metal cations, such as Ca²⁺ and/or Mg²⁺, such proteins are preferably first mixed with a component which is able to complex metal cations of this type (for example, phosphate) before adding thereto the hydrocolloid precipitating with polyvalent metal cations. Examples of proteins having a high calcium content include calcium caseinate, rennet casein and some whey protein concentrates, for example those derived from sweet whey having a higher calcium content. The use of suitable complex-forming compounds and the appropriate amounts are described in WO 03/061 400, to which reference is explicitly made.

A particularly preferred embodiment uses the combination of native whey protein and water-soluble caseinate. Preferably, native whey protein and caseinate are added in a weight ratio which is in the range of from 1:10 to 5:1, more particularly from 1:6 to 3:1, particularly preferably from 1:5 to 1:1.

During denaturation of the native globular protein, preferably whey protein, in the presence of caseinate, it is assumed, without thereby entailing any limitation, that the globular protein denatures on the caseinate and thus encapsulates the caseinate and reduces the solubility of the caseinate and increases the particle size. Rrior to the denaturing process the caseinate and the native whey protein may be mixed with each other as a solution or they may first be mixed with each other in dry form, after which the water is then added.

In an advantageous embodiment of the invention, the protein present is encased or encapsulated by being brought into contact, preferably mixed, with charged and/or uncharged polysaccharides, preferably carrageen, guar gum and/or starch. The ratios of the components are chosen in this case in such a way that the product yields are high, the protein losses minimal and the quality of the fibres favourable. The compound of protein and polysaccharide is preferably heated prior to the mixing with the hydrocolloid. The polysaccharide concentration may vary in this case from 0.5 to 10 % and the milk protein concentration from 2 to 15 %, based on the total.

The charged polysaccharides are preferably chosen from the group consisting of guar gum and/or carrageen, preferably carrageen. Preferably, the charged polysaccharides are present in an amount of from 0.1 to 5 parts of charged polysaccharides to 1 part of protein, preferably from 0.2 to 2 parts.

The uncharged polysaccharides are preferably chosen from the group consisting of modified and unmodified starches, preferably potato starch or maize starch. Preferably, the uncharged polysaccharides are present in an amount of from 0.1 to 5 parts of starch to 1 part of protein, preferably from 0.2 to 2 parts. Mixtures of charged and uncharged polysaccharides may of course also be added, preferably in the aforementioned ratios.

Use of the method according to the invention provides an increased economic return. In general, a protein yield of at least 75 %, preferably of at least 80 % and particularly preferably of at least 85 %, is achieved. The term "protein yield" refers to the amount of protein present in the separated fibres, expressed as a percentage of the total amount of protein that was incorporated into the homogeneous aqueous mixture.

In addition to an increase in the product yield and good fibre quality, the protein content in the waste water stream is substantially lowered in the present method relative to the protein content found therein if merely water-soluble non-globular protein is used (starting from the same protein concentration in the homogeneous aqueous mixture). In general, the protein loss is reduced by at least 10 %, preferably by at least 20 % and more particularly by at least 30 % in the present method as a result of the use of the native globular protein. A significant reduction is noted even if the amount of protein in the waste water of the present method is compared with that in waste water obtained from a similar method using denatured instead of native globular protein. In general, this reduction is at least 10 %, preferably at least 20 %, more particularly at least 25 %.

In the present method, finishing materials may also be added; preferably, this takes place on the homogeneous mixture of protein, hydrocolloid precipitating with metal cations, and water which is formed at an elevated temperature. The finishing material may be chosen from a flavouring substance, a colouring agent, vegetable or animal fat, vegetable or animal proteins, parts of vegetables and/or fruits or else mixtures of two or more materials of this type. Obviously, finishing materials may also be added and mixed in after the formation, by precipitation, of the fibrous product or after separation of the fibres.

Another aspect of the present invention concerns a food product containing at least 40 % by weight, preferably at least 70 % by weight, of fibres having the following composition:
a. from 1 to 10 % by weight of globular protein belonging to the group of proteins consisting of whey protein, egg protein, soya protein and combinations thereof;
b. from 1 to 12 % by weight of non-globular protein belonging to the group of proteins consisting of caseinate, pea protein, lupin protein, wheat protein, potato protein and combinations thereof;
c. from 0.5 to 10 % by weight of hydrocolloid which precipitates with metal cations with a valency of at least two; and
d. from 40 to 90 % by weight of water;
wherein the total protein content of the fibres is in the range of from 4 to 20 % by weight and which fibres are characterised by the fact that they consist of curled up skins.

The weight ratio of globular protein to non-globular protein in the fibres of the food product is preferably in the range of from 1:100 to 5:1, more particularly from 1:10 to 3:1, particularly preferably from 1:5 to 1:1.

In a particularly preferred embodiment, the globular protein is whey protein, especially whey protein derived from sour whey (for example, WPC 80 sour). The food product preferably contains caseinate as the non-globular protein. As described above, the use of sour whey has the advantage of providing a composition enriched with various essential amino acids, thus providing for the product a more favourable amino acid composition than that of meat; this entails a substantial improvement in quality. The amino acid composition of the combination of proteins present in the fibres preferably matches the following profile:

| | |
|---|---|
| Tryptophan | From 1.6 to 2.8 % by weight, preferably from 1.8 to 2.5 % by weight |
| Lysine | From 8.5 to 12.0 % by weight, preferably from 9.0 to 11.0 % by weight |
| Cysteine | From 1.0 to 3.5 % by weight, preferably from 1.5 to 3.0 % by weight |
| Methionine | From 2.0 to 3.5 % by weight, preferably from 2.4 to 3.2 % by weight |

The fibres in the food product according to the present invention preferably contain from 1 to 20 % by weight of triglycerides, preferably triglycerides derived from a vegetable oil. Particularly preferred is the use of triglycerides in the form of non-hydrogenated vegetable oil.

Owing to nutritional considerations, the lactose content of the fibres should preferably be less than 2% by weight. It should also be noted in this regard that an increased lactose content causes additional losses in the process water, and this is undesirable owing to environmental considerations. The invention will be described in greater detail with reference to the following examples.

### Examples

### Standard formulation

Dietary fibres were prepared on a laboratory scale using the methods described hereinafter, unless otherwise indicated:

For the preparation of the fibres, a solution having a protein content of 12 % was formed; this solution was brought to a temperature of 70 °C. The solution was mixed with a 4 % sodium alginate solution at a temperature of 60 °C. 256 g of alginate solution were used per 500 g of protein solution - referred to as smelt.

Once these solutions had been thoroughly mixed, 221 g of a 4 % CaCl₂₋ solution were added slowly while stirring continuously. The mixture was kneaded until the fibres were produced. The released process water was subsequently drained.

Water was then added while stirring; during the washing process, the excess CaCl₂ was removed and the further formation of fibres terminated. The mixture was then drained again and cooled. The yield of fibres was determined and sampling carried out. The collected process water and washing water were also sampled.

The cooled fibres were optionally mixed with a binder, i.e. 1 % of methylcellulose (Dow Chemical) and 2 % of chicken egg protein; 3 % of flavouring substance were then added. Once this had been mixed, patties could be formed from the mass of fibres. These patties were pasteurised for a few minutes (core of the product, from 85 to 90 °C) or fried at approximately 170 °C, or a combination of both. The product obtained was similar to a meat or fish substitute.

### Example 1 - Comparison of various dairy raw materials

Various raw materials were used on a laboratory scale for the preparation of the fibres. These raw materials were curd (Campina Holland Cheese), rennet casein (Havero-Hoogwegt), sodium caseinate (DMV International), whey protein concentrates derived from cheese whey (WPC 80 - Arla Foods) and skimmed milk powder (Campina GmbH). The formulation was established on the basis of the protein content. The amounts of each ingredient on 500 g of smelt are reproduced in the following table:

**Table 1**

| | |
|---|---|
| Curd | 500 g with a protein content of 12 % |
| Rennet casein | 66.7 g dissolved in water up to 500 g |
| Sodium caseinate | 66.7 g dissolved in water up to 500 g |
| WPC 80 sweet | 75 g dissolved in water up to 500 g |
| WPC 80 sour | 75 g dissolved in water up to 500 g |
| Skimmed milk powder | 200 g dissolved in water up to 500 g |

For the preparation of the smelt, the indicated amount of ingredient had added to it water up to 500 g. This was mixed with the water with or without the aid of a Moulinex mixer. Following WO 03/061400, polyphosphate was used for curd, rennet casein and skimmed milk powder. 7 g of phosphate were added to 500 g of smelt and the temperature was brought to approximately 75 °C. The pH was not set for the preparation of the fibres. In the case of sodium caseinate, WPC sweet and WPC sour, no phosphate was used.

The standard formulation was used for the preparation of the fibres. The results are set out in the following Table 2:

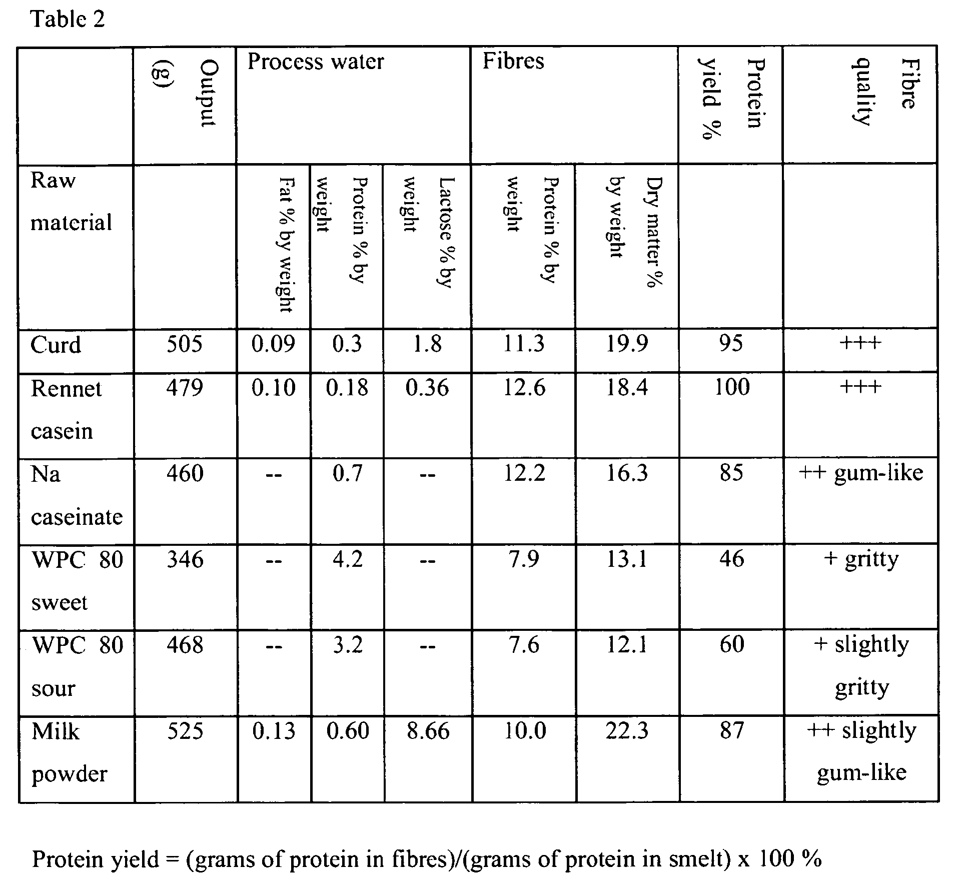

The protein yields which were found varied markedly. Above all, the WPCs and in particular WPC 80 sweet displayed a low yield and curd/rennet casein a high yield. Milk powder assumed an intermediate position in terms of yield: however, the process water which was obtained displayed a very high lactose content. This raw material is therefore less preferred. The use of milk protein concentrate (MPC 80), wherein the lactose is largely removed by ultrafiltration, provided as a result of the very low lactose content a much lower lactose content in the process water.

Not only the protein yields but also the output of fibres varied markedly. WPC 80 sweet, in particular, produced a less good result.

The quality of the fibres, especially what is known as bite, was evaluated by a panel using the following scale:
-- = very poor
- = poor
+ = moderate
++ = good
+++ = very good

In addition to this evaluation score, the quality of the fibres was described qualitatively using indications such as gritty, gum-like, pulpy, etc.

The quality of the fibres derived from the raw materials skimmed milk powder and WPC 80 provided a moderate result with the remark "gritty". Curd and rennet casein scored highly, whereas WPC 80 sweet and sodium caseinate assumed an intermediate position. The latter two were judged to be "gum-like".

### Example 2 - Sodium caseinate with whey protein

In this example, sodium caseinate was used in various concentrations in combination with WPC 80 sweet and WPC 80 sour. WPC 80 sweet is derived from cheese whey and WPC 80 sour from sour casein whey. In those cases in which modified (denatured) WPC 80 was used, the protein-containing solution was heated to 80 °C while stirring and maintained at this temperature for 15 minutes while stirring continuously before the alginate solution was added. The fibres were formed in accordance with the standard formulation, the use of phosphate being dispensed with.

The results are set out in the following Table 3:

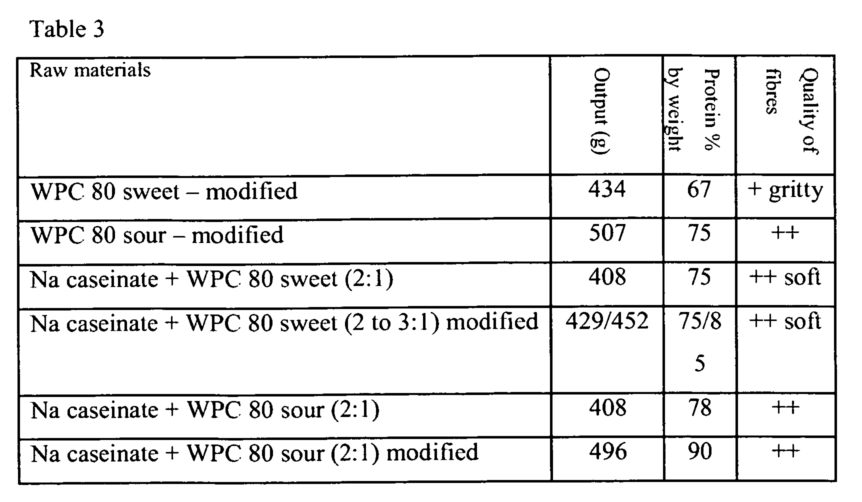

The data of Table 3 reveals that heat treatment of the smelt, probably as a result of enlargement of the particles, led to a favourable output and protein yield. The combination of sodium caseinate and WPC 80 sour modified, in particular, scored highly, i.e. a product output of 496 grams and a protein yield of 90 %. Qualitatively, all of the combinations of sodium caseinate and WPC 80, both sweet and sour, scored well. Only WPC 80 sweet - modified performed less in this respect owing to its gritty structure, whereas the combination with sodium caseinate had a pleasant soft texture.

### Example 3 - Mixtures of milk proteins and vegetable proteins

In this example, fibres were prepared from sodium caseinate and soya concentrate (67 % by weight of protein, 21 % by weight of carbohydrate), on the one hand, and from pea isolate (86 % by weight of protein, 4 % by weight of carbohydrate) and WPC 80, on the other hand. In the case of the mixture of sodium caseinate and soya concentrate, two different mixing ratios were used. The above-described standard formulations were used in the preparation (without the addition of phosphate). The protein-containing solution was heated to 75 °C while stirring and maintained for 15 minutes at this temperature before the alginate solution was added. After addition of a 4 % CaCl₂ solution, the fibres were formed and then processed with the specified binders to form patties. Table 4 reproduces the results including the outcome of a qualitative evaluation.

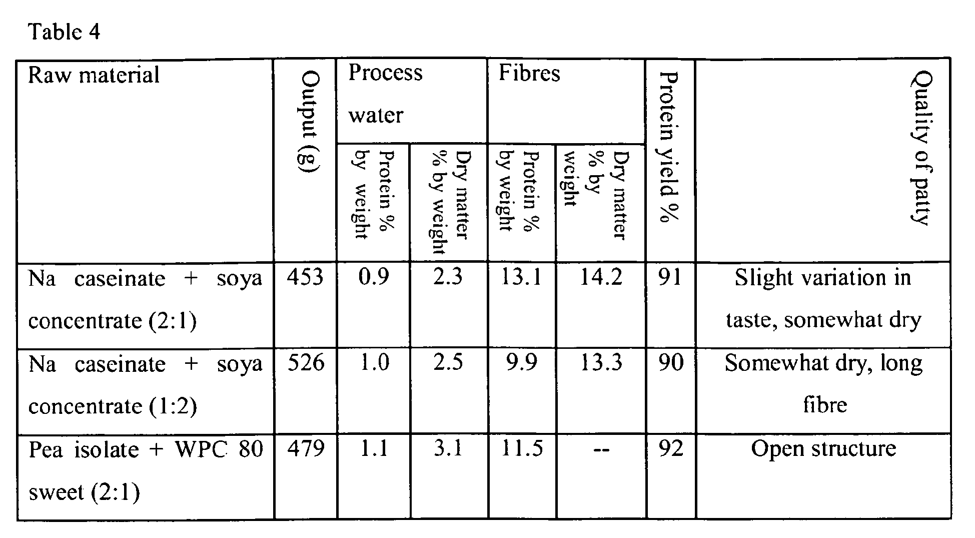

The data of Table 4 reveals that the tested mixtures of milk proteins and vegetable proteins provided a good output and a good protein yield. In addition, the panel judged the quality of the patties obtained to be reasonable.

## Claims

1. Method for the preparation of high-protein dietary fibres involving the following process steps:
a. preparing a homogeneous aqueous mixture by mixing, said homogeneous aqueous mixture comprising the following ingredients:
• from 1 to 10 % by weight of native globular protein belonging to the group consisting of whey proteins, egg proteins, soya proteins and combinations thereof;
• from 1 to 12 % by weight of water-soluble, non-globular protein;
• from 0.5 to 10 % by weight of a hydrocolloid which precipitates with metal cations with a valency of at least two; and
• at least 60 % by weight of water;
b. combining the mixture with an aqueous solution containing from 0.1 to 5 % by weight of metal cations with a valency of at least two, the precipitating material being mechanically processed to obtain fibrous structures;
c. separating the fibres thus obtained;
wherein prior to the combining of the mixture with the aqueous solution of a metal cation, the native globular protein is denatured.

2. Method according to Claim 1, wherein the water-soluble, non-globular protein is a vegetable protein and/or milk protein.

3. Method according to Claim 2, wherein the water-soluble, non-globular protein belongs to the group of proteins consisting of: caseinate, pea protein, lupin protein, wheat protein, potato protein and combinations thereof.

4. Method according to Claim 1 or 2, wherein the native globular protein is whey protein, preferably sour whey protein.

5. Method according to any one of the preceding claims, wherein the aqueous mixture contains the native globular protein and the water-soluble, non-globular protein in a weight ratio of between 1:10 and 5:1.

6. Method according to any one of the preceding claims, wherein the aqueous mixture contains the hydrocolloid which precipitates with metal cations with a valency of at least two and the combination of native globular protein and water-soluble, non-globular protein in a weight ratio of between 1:6 and 1:1, preferably between 1:5 and 1:2.

7. Method according to any one of the preceding claims, wherein the hydrocolloid which precipitates with metal cations with a valency of at least two belongs to the group consisting of alginates, pectins and mixtures thereof.

8. Method according to any one of the preceding claims, wherein the denaturing process takes place before the aqueous solution of metal cations with a valency of at least two is added.

9. Method according to Claim 8, wherein first of all a mixture is formed of the native globular protein, the water-soluble, non-globular protein and water, the native globular protein is subsequently denatured and the hydrocolloid which precipitates with metal cations with a valency of at least two is then added.

10. Method according to any one of the preceding claims, wherein at least 60 % by weight of the native globular protein is denatured.

11. Food product containing at least 40 % by weight of fibres obtainable by the method according to any one of claims 1-10, said fibres comprising:
a. from 1 to 10 % by weight of globular protein belonging to the group of proteins consisting of whey protein, egg protein, soya protein and combinations thereof;
b. from 1 to 12 % by weight of non-globular protein belonging to the group of proteins consisting of caseinate, pea protein, lupin protein, wheat protein, potato protein and combinations thereof;
c. from 0.5 to 10 % by weight of hydrocolloid which precipitates with metal cations with a valency of at least two; and
d. from 40 to 90 % by weight of water;
wherein the total protein content of the fibres is in the range of from 4 to 20 % by weight and which fibres are **characterised by** the fact that they consist of curled up skins.

12. Food product according to Claim 11, wherein the weight ratio of globular protein to non-globular protein in the fibres is in the range of from 1:10 to 5:1, preferably from 1:6 to 2:1.

13. Food product according to Claim 11 or 12, **characterised in that** the fibres contain from 1 to 20 % by weight of triglycerides.

## Patentansprüche

1. Verfahren zur Herstellung von proteinreichen Diätfasern bzw. Ballaststoffen (dietary fibers), umfassend die folgenden Verfahrensschritte:
a. Herstellen einer homogenen wässrigen Mischung durch Vermischen, wobei die homogene wässrige Mischung die folgenden Inhaltsstoffe umfasst:
• 1 bis 10 Gew.-% natives globuläres Protein, das zu der Gruppe bestehend aus Molkenproteinen, Eiproteinen, Sojaproteinen und Kombinationen davon gehört;
• 1 bis 12 Gew.-% wasserlösliches, nicht-globuläres Protein;
• 0,5 bis 10 Gew.-% eines Hydrokolloids, welches mit Metallkationen mit einer Wertigkeit von wenigstens zwei ausfällt; und
• wenigstens 60 Gew.-% Wasser;
b. Vereinigen der Mischung mit einer wässrigen Lösung, die 0,1 bis 5 Gew.-% Metallkationen mit einer Wertigkeit von wenigstens zwei enthält, wobei das ausfallende Material mechanisch verarbeitet wird, um faserartige Strukturen zu erhalten;
c. Abtrennen der so erhaltenen Fasern;
wobei vor dem Vereinigen der Mischung mit der wässrigen Lösung eines Metallkations das native globuläre Protein denaturiert wird.

2. Verfahren nach Anspruch 1, wobei das wasserlösliche nicht-globuläre Protein ein pflanzliches Protein und/oder Milchprotein ist.

3. Verfahren nach Anspruch 2, wobei das wasserlösliche nicht-globuläre Protein zu der Gruppe von Proteinen bestehend aus Caseinat, Erbsenprotein, Lupinenprotein, Weizenprotein, Kartoffelprotein und Kombinationen davon gehört.

4. Verfahren nach Anspruch 1 oder 2, wobei das native globuläre Protein Molkenprotein, vorzugsweise Sauermolkenprotein ist.

5. Verfahren nach einem der vorangehenden Ansprüche, wobei die wässrige Mischung das native globuläre Protein und das wasserlösliche nicht-globuläre Protein in einem Gewichtsverhältnis zwischen 1:10 und 5:1 enthält.

6. Verfahren nach einem der vorangehenden Ansprüche, wobei die wässrige Mischung das Hydrokolloid, welches mit Metallkationen mit einer Wertigkeit von wenigstens zwei ausfällt, und die Kombination von nativem globulären Protein und wasserlöslichem nicht-globulären Protein in einem Gewichtsverhältnis zwischen 1:6 und 1:1, vorzugsweise zwischen 1:5 und 1:2, enthält.

7. Verfahren nach einem der vorangehenden Ansprüche, wobei das Hydrokolloid, welches mit Metallkationen mit einer Wertigkeit von wenigstens zwei ausfällt, zu der Gruppe bestehend aus Alginaten, Pektinen und Mischungen davon gehört.

8. Verfahren nach einem der vorangehenden Ansprüche, wobei der Denaturierungsprozess stattfindet, bevor die wässrige Lösung von Metallkationen mit einer Wertigkeit von wenigstens zwei zugegeben wird.

9. Verfahren nach Anspruch 8, wobei zunächst eine Mischung aus dem nativen globulären Protein, dem wasserlöslichen nicht-globulären Protein und Wasser gebildet wird, das native globuläre Protein anschließend denaturiert wird und dann das Hydrokolloid, welches mit Metallkationen mit einer Wertigkeit von wenigstens zwei ausfällt, zugegeben wird.

10. Verfahren nach einem der vorangehenden Ansprüche, wobei wenigstens 60 Gew.-% des nativen globulären Proteins denaturiert wird.

11. Nahrungsmittelprodukt, enthaltend wenigstens 40 Gew.-% Fasern, die durch das Verfahren nach einem der Ansprüche 1-10 erhältlich sind, wobei die Fasern umfassen:
a. 1 bis 10 Gew.-% globuläres Protein, das zu der Gruppe von Proteinen bestehend aus Molkenprotein, Eiprotein, Sojaprotein und Kombinationen davon gehört;
b. 1 bis 12 Gew.-% nicht-globuläres Protein, das zu der Gruppe von Proteinen bestehend aus Caseinat, Erbsenprotein, Lupinenprotein, Weizenprotein, Kartoffelprotein und Kombinationen davon gehört;
c. 0,5 bis 10 Gew.-% Hydrokolloid, welches mit Metallkationen mit einer Wertigkeit von wenigstens zwei ausfällt; und
d. 40 bis 90 Gew.-% Wasser;
wobei der Gesamtproteingehalt der Fasern im Bereich von 4 bis 20 Gew.-% liegt und wobei die Fasern **dadurch gekennzeichnet sind, dass** sie aus aufgerollten Häuten bestehen.

12. Nahrungsmittelprodukt nach Anspruch 11, wobei das Gewichtsverhältnis von globulärem Protein zu nicht-globulärem Protein in den Fasern im Bereich von 1:10 bis 5:1, vorzugsweise von 1:6 bis 2:1 liegt.

13. Nahrungsmittelprodukt nach Anspruch 11 oder 12, **dadurch gekennzeichnet, dass** die Fasern 1 bis 20 Gew.-% Triglyceride enthalten.

## Revendications

1. Procédé de préparation de fibres alimentaires à teneur élevée en protéine comprenant les étapes suivantes du procédé :
a. préparation d'un mélange aqueux homogène en mélangeant ledit mélange aqueux homogène comprenant les ingrédients suivants :
- de 1 à 10 % en poids de protéine globulaire native appartenant au groupe constitué par les protéines de lactosérum, les protéines d'oeuf, les protéines de soja et leurs combinaisons ;
- de 1 à 12 % en poids de protéine non globulaire hydrosoluble ;
- de 0,5 à 10 % en poids d'un hydrocolloïde qui précipite avec des cations métalliques présentant une valence d'au moins deux ; et
- au moins 60 % en poids d'eau ;
b. combinaison du mélange avec une solution aqueuse contenant de 0,1 à 5 % en poids de cations métalliques présentant une valence d'au moins deux, le matériau qui précipite étant traité mécaniquement pour obtenir des structures fibreuses ; et
c. séparation des fibres ainsi obtenues ;
dans lequel la protéine globulaire native est dénaturée avant la combinaison du mélange avec la solution aqueuse d'un cation métallique.

2. Procédé selon la revendication 1, dans lequel la protéine non globulaire hydrosoluble est une protéine végétale et/ou une protéine du lait.

3. Procédé selon la revendication 2, dans lequel la protéine non globulaire hydrosoluble appartient au groupe de protéines constitué par le caséinate, la protéine de pois, la protéine de lupin, la protéine de blé, la protéine de pomme de terre et leurs combinaisons.

4. Procédé selon la revendication 1 ou la revendication 2, dans lequel la protéine globulaire native est une protéine de lactosérum, de préférence, une protéine de lactosérum aigre.

5. Procédé selon l'une quelconque des revendications précédentes, dans lequel le mélange aqueux contient la protéine globulaire native et la protéine non globulaire hydrosoluble en un rapport en poids entre 1:10 et 5:1.

6. Procédé selon l'une quelconque des revendications précédentes, dans lequel le mélange aqueux contient l'hydrocolloïde qui précipite avec des cations métalliques présentant une valence d'au moins deux et la combinaison de la protéine globulaire native et de la protéine non globulaire hydrosoluble en un rapport en poids entre 1:6 et 1:1, de préférence entre 1:5 et 1:2.

7. Procédé selon l'une quelconque des revendications précédentes, dans lequel l'hydrocolloïde qui précipite avec les cations métalliques présentant une valence d'au moins deux appartient au groupe constitué par les alginates, les pectines et leurs mélanges.

8. Procédé selon l'une quelconque des revendications précédentes, dans lequel le procédé de dénaturation a lieu avant d'ajouter la solution aqueuse de cations métalliques présentant une valence d'au moins deux.

9. Procédé selon la revendication 8, dans lequel un mélange de la protéine globulaire native, de la protéine non globulaire hydrosoluble et d'eau est tout d'abord formé, la protéine globulaire native est ensuite dénaturée et l'hydrocolloïde qui précipite avec les cations métalliques présentant une valence d'au moins deux est ensuite ajouté.

10. Procédé selon l'une quelconque des revendications précédentes, dans lequel au moins 60 % en poids de la protéine globulaire native sont dénaturés.

11. Produit alimentaire contenant au moins 40 % en poids de fibres pouvant être obtenues par le procédé selon l'une quelconque des revendications 1 à 10, lesdites fibres comprenant :
a. de 1 à 10 % en poids de protéine globulaire appartient au groupe des protéines constitué par les protéine de lactosérum, protéine d'oeuf, protéine de soja et leurs combinaisons ;
b. de 1 à 12 % en poids de protéine non globulaire appartenant au groupe des protéines constitué par le caséinate, la protéine de pois, la protéine de lupin, la protéine de blé, la protéine de pomme de terre et leurs combinaisons ;
c. de 0,5 à 10 % en poids d'hydrocolloïde qui précipite avec des cations métalliques présentant une valence d'au moins deux ; et
d. de 40 à 90 % en poids d'eau ;
dans lequel la teneur en protéine totale des fibres est de l'ordre de 4 à 20 % en poids et les fibres sont **caractérisées par le fait qu'**elles sont constituées de pellicules frisées.

12. Produit alimentaire selon la revendication 11, dans lequel le rapport en poids de la protéine globulaire à la protéine non globulaire dans les fibres est de l'ordre de 1:10 à 5:1, de préférence de 1:6 à 2:1.

13. Produit alimentaire selon la revendication 11 ou la revendication 12, **caractérisé en ce que** les fibres contiennent de 1 à 20 % en poids de triglycérides.
